# EUROPÄISCHE PATENTSCHRIFT

(11) **EP 3 966 148 B1**
(45) Veröffentlichungstag und Bekanntmachung des Hinweises auf die Patenterteilung: **12.03.2025**
(21) Anmeldenummer: 20721656.5
(22) Anmeldetag: 04.05.2020
(51) Int. Cl.: B66B 5/00, B66B 19/00, G06F 30/13

(54) **VERFAHREN ZUR ERFASSUNG VON AUFZUGSDATEN UND ZUR ERZEUGUNG EINES DIGITALEN ZWILLINGS EINER BESTEHENDEN AUFZUGSANLAGE**
METHOD FOR ACQUIRING DATA AND CREATING A DIGITAL TWIN OF AN EXISTING ELEVATOR SYSTEM
PROCÉDÉ DE DÉTECTION DES DONNÉES ET DE CREATION D'UN JUMEAU NUMÉRIQUE D'UN SYSTÈME D'ASCENSEUR EXISTANT

(30) Priorität: 07.05.2019 EP 19173039
(43) Veröffentlichungstag der Anmeldung: 16.03.2022
(73) Patentinhaber: INVENTIO AG, 6052 Hergiswil (CH)
(72) Erfinder: CORTONA, Elena, 8002 Zürich (CH)
(74) Vertreter: Inventio AG
(86) Internationale Anmeldenummer: PCT/EP2020/062301
(87) Internationale Veröffentlichungsnummer: WO 2020/225203

(56) Entgegenhaltungen:
- EP-A1- 2 885 236
- EP-B1- 2 885 236
- KONE: "Aufzugsplanung, CADs: KONE Toolbox - Aufzüge online planen, 3D-Kabinen und Downloads", 12 January 2016 (2016-01-12), XP055648002, Retrieved from the Internet <URL:https://toolbox.kone.com/de_DE#building> [retrieved on 20191129]
- DIGIPARA AG: "Video 1: Creating an Elevator (DigiPara Liftdesigner for Autodesk Inventor Quicktour)", 28 March 2013 (2013-03-28), pages 1 - 3, XP054980785, Retrieved from the Internet <URL:https://www.youtube.com/watch?v=aZ2lAmgf4kY> [retrieved on 20200814]
- DIGIPARA AG: "Video 2: Modifying the Elevator (DigiPara Liftdesigner for Autodesk Inventor Quicktour)", 28 March 2013 (2013-03-28), pages 1 - 3, XP054980786, Retrieved from the Internet <URL:https://www.youtube.com/watch?v=uEY9y8rFARE> [retrieved on 20200814]
- DIGIPARA AG: "Tutorial: Elevator Cabin Configurator (Part 1: create wall panels)", 9 July 2013 (2013-07-09), pages 1 - 3, XP054980784, Retrieved from the Internet <URL:https://www.youtube.com/watch?v=euxjk_0dFgE> [retrieved on 20200814]

## Beschreibung

Die Erfindung betrifft ein Verfahren zur Erfassung und Bearbeitung von Aufzugsdaten einer bestehenden Aufzugsanlage sowie eine Vorrichtung zur Durchführung dieses Verfahrens.

Aufzugsanlagen dienen dazu, Personen innerhalb von Gebäuden oder Bauwerken zu befördern. Dabei muss stets eine ausreichende Betriebssicherheit, aber auch eine möglichst durchgängige Verfügbarkeit gewährleistet sein. Hierfür werden Aufzugsanlagen herkömmlich meist in regelmäßigen Intervallen kontrolliert und/oder gewartet. Die Intervalle werden dabei in der Regel basierend auf Erfahrungen mit ähnlichen Aufzugsanlagen festgelegt, wobei die Intervalle zur Wahrung der Betriebssicherung ausreichend kurz gewählt werden müssen, sodass rechtzeitig vor Eintritt etwaiger sicherheitsgefährdender Betriebsbedingungen eine Kontrolle bzw. Wartung durchgeführt wird.

Bei Aufzugsanlagen werden die Kontrollen dabei meist völlig unabhängig von deren tatsächlichem aktuellen Zustand durchgeführt. Das heißt, ein Techniker muss die Aufzugsanlage besuchen und vor Ort inspizieren. Häufig wird dabei erkannt, dass keinerlei Wartung dringend notwendig ist. Der Besuch des Technikers stellt sich somit als überflüssig heraus und verursacht unnötige Kosten. Andererseits wird für den Fall, dass der Techniker tatsächlich Wartungsbedarf erkennt, in vielen Fällen eine weitere Anfahrt erforderlich, da der Techniker erst vor Ort feststellen kann, welche Komponenten der Aufzugsanlage einer Wartung bedürfen, und somit erst vor Ort ersichtlich wird, dass für eine Wartung bzw. Reparatur beispielsweise Ersatzteile oder spezielle Werkzeuge benötigt werden.

Bestehende Aufzugsanlagen werden zudem nicht zwingend vom Aufzugshersteller selbst gewartet. So kann es aus verschiedensten Gründen dazu kommen, dass sogenannte Fremdanlagen, also Aufzugsanlagen anderer Aufzugshersteller in das eigene Wartungsportfolio übernommen und gewartet werden. Gegebenenfalls werden solche Fremdanlagen modernisiert, so dass in einer modernisierten Aufzugsanlage hernach Bauteile verschiedener Hersteller aufeinander angepasst, verbaut sind. Häufig wird bei solchen Fremdanlagen beispielsweise die bestehende, fremde Aufzugssteuerung durch eine eigene Aufzugssteuerung ersetzt, da die Architektur und die Eigenschaften der eigenen Aufzugssteuerung bekannt sind und keine Spezialkenntnisse der fremden Aufzugssteuerung erworben werden müssen. Hierbei müssen aber verschiedene Parameter beziehungsweise charakterisierende Eigenschaften der bestehenden Aufzugsanlage wie beispielsweise die Anzahl Stockwerke, die Stockwerkhöhen, die auf die mechanischen und elektrischen Komponenten abgestimmten Bewegungsprofile der Aufzugskabine über die einzelnen Stockwerkhöhen und dergleichen mehraufgenommen und in der eigene Aufzugssteuerung implementiert werden.

Wenn eine Fremdanlage in das Wartungsportfolio übernommen wird, stellt sich daher immer das Problem der Erfassung der technischen Daten dieser bestehenden Aufzugsanlage sowie deren Verfügbarmachung. Üblicherweise wird ein Techniker in die zu übernehmende Fremdanlage geschickt, der dann verschiedene charakterisierende Eigenschaften dieser Aufzugsanlage ermittelt und manuell in einem Formular oder in einer Datenbank erfasst. Je nach der Komplexität einer zu übernehmenden Aufzugsanlage müssen beispielsweise 15 bis 50 Parameter erfasst und als charakterisierende Eigenschaften manuell im Formular oder in der Datenbank eingetragen weden. Die manuelle Erfassung der charakterisierenden Eigenschaften und deren Dokumentierung in der Datenbank erfordert einen enormen Zeitaufwand und kann je nach der Arbeitsqualität des Technikers zu einer schlechten Datenqualität führen.

Selbstverständlich kann die Wartungsverantwortung einer bestehenden Aufzugsanlage auch mehrmals wechseln, wobei erfahrungsgemäss die durch die verschiedenen Wartungsfirmen durchgeführten Veränderungen an der Aufzugsanlage kaum oder gar nicht dokumentiert sind. Somit muss auch bei einer ins Wartungsportfolio «zurückkehrenden» Aufzugsanlage zuerst eine gründliche Bestandesaufnahme bezüglich ihrer aktuellen charakterisierenden Eigenschaften gemacht werden.

In der EP 2 885 236 A1 wird mittels eines Scanners die Struktur einer Aufzugsanlage erfasst und mit einer Datenbank verglichen, in der bekannte Aufzugselemente gespeichert sind. Dadurch können die zur erfassten Struktur passenden Aufzugselemente in der Datenbank identifiziert werden. Allerdings ist das Scannen der Struktur mit erheblichem Aufwand verbunden und es kann bei bestehenden Aufzugsanlagen das Risiko vorhanden sein, dass infolge von Verschmutzungen verursachten Abweichungen der erfassten Struktur, Aufzugselemente nicht identifiziert oder falsche Aufzugselemente identifiziert werden.

Aufgabe der vorliegenden Erfindung ist daher, die Erfassung der charakterisierenden Eigenschaften einer bestehenden Aufzugsanlage zu vereinfachen, die Datenqualität der erfassten charakterisierenden Eigenschaften zu erhöhen und deren Verfügbarkeit und Verarbeitbarkeit zu verbessern.

Diese Aufgabe wird gelöst durch ein Verfahren zur Erfassung und Bearbeitung von Aufzugsdaten einer bestehenden Aufzugsanlage, wobei durch mindestens eine Messfahrt mit der bestehenden Aufzugsanlage jedes Stockwerk der bestehenden Aufzugsanlage zumindest einmal angefahren und mittels einer Messeinrichtung zumindest diejenigen Messdaten erfasst werden, die Stockwerkhöhen repräsentieren.

Des Weiteren wird ein dreidimensionaler Digitaler-Doppelgänger-Datensatz aus Bauteilmodell-Datensätzen aufgebaut und in einem Speichermedium gespeichert, wobei die Bauteilmodell-Datensätze unterschiedliche Konfigurationen aufweisen können und durch charakterisierende Eigenschaften definiert sind, die mit Vorgabe-Werten vordefiniert sind. Für jedes durch die Messfahrt erfasste Stockwerk der Aufzugsanlage werden in der erfassten Reihenfolge als Stockwerkabschnitt-Bauteilmodell-Datensatz konfigurierte Bauteilmodell-Datensätze oder als Schachtabschnitt-Bauteilmodell-Datensatz konfigurierte Bauteilmodell-Datensätze in vertikaler Richtung übereinander angeordnet. Hierbei wird bei diesen Bauteilmodell-Datensätzen jeweils der Vorgabe-Wert der charakterisierenden Eigenschaft, die den Höhenabstand zum nächsten Stockwerkabschnitt- Bauteilmodell-Datensatz oder Schachtabschnitt-Bauteilmodell-Datensatz definiert, durch die entsprechende, aus den Messdaten ermittelte Stockwerkhöhe ersetzt. Das Merkmal in vertikaler Richtung übereinander angeordnet bedeutet hierbei, dass die Anordnung der Bauteilmodell-Datensätze derart erfolgt, dass Stockwerke und Schachtabschnitte analog zur bestehenden Aufzugsanlage auch im dreidimensionaler Digitaler-Doppelgänger-Datensatz virtuell abgebildet sind, wobei «vertikal» im Allgemeinen die Transportrichtung umschreibt. Ein Stockwerkabschnitt-Bauteilmodell-Datensatz unterscheidet sich hierbei vom Schachtabschnitt-Bauteilmodell-Datensatz dadurch, dass er offener ist, das heisst, weniger charakterisierende Eigenschaften aufweist. Ein Stockwerkabschnitt-Bauteilmodell-Datensatz wird dann gewählt, wenn für später durchzuführende Simulationen im Wesentlichen die Stockwerkhöhen von Belang sind und der Erfassungsaufwand minimal gehalten werden soll. Wenn aber auch der Schachtquerschnitt für die Simulationen wichtig ist, kann ein Schachtabschnitt-Bauteilmodell-Datensatz gewählt werden, für dessen Abmessungen bereits charakterisierende Eigenschaften vorgesehen sind. Logischerweise können zuerst auch Stockwerkabschnitt - Bauteilmodell- Datensätze ausgewählt, und diesen später Schachtabschnitt-Bauteilmodell-Datensätze angefügt werden.

Die Messeinrichtung im Sinne der vorliegenden Anmeldeschrift kann eine Vielzahl von Geräten umfassen. Beispielsweise kann dies ein Mobiltelefon mit einem Beschleunigungssensor sein, welches auf den Kabinenboden gelegt wird und bei den Fahrten von Stockwerk zu Stockwerk die Messdaten aufnimmt. Sie kann auch eine mit der Aufzugssteuerung der bestehenden Aufzugsanlage verbindbare Übertragungseinheit sein, die Messdaten aus der Aufzugssteuerung ausliest, diese gegebenenfalls in vorgesehener Weise aufbereitet und dem weiter unten beschriebenen System verfügbar macht. Die Messeinrichtung kann nebst dem vorangehend beschriebenen Mobiltelefon oder der Übertragungseinheit auch eine Vielzahl von dauerhaft oder temporär miteinander kommunizierender Geräte wie ein portabler Computer, ein Datenlogger, ein Laserscanner, ein RFID-Tag- Lesegerät und dergleichen mehr sein oder diese umfassen.

Mit anderen Worten kann für jedes durch die Messfahrt erfasste Stockwerk der Aufzugsanlage in der erfassten Reihenfolge beispielsweise jeweils ein als Stockwerkabschnitt-Bauteilmodell-Datensatz konfigurierter Bauteilmodell-Datensatz in vertikaler Richtung übereinander angeordnet werden und jeweils der Vorgabe-Wert von dessen charakterisierender Eigenschaft, die den Höhenabstand zum nächsten Stockwerkabschnitt- Bauteilmodell-Datensatz definiert, durch den entsprechenden, aus den Messdaten ermittelten Stockwerkhöhe ersetzt werden.

Durch den Aufbau eines dreidimensionalen Digitaler-Doppelgänger-Datensatzes wird ein digitales dreidimensionales Abbild der bestehenden Aufzugsanlage geschaffen, dessen wesentliche charakterisierende Eigenschaften durch die Übernahme und Implementierung der Messdaten den charakterisierenden Eigenschaften der zugeordneten Aufzugsanlage entsprechen. Hierbei wird anhand der erfassten Messdaten zumindest die Anzahl Stockwerke mit einer entsprechenden Anzahl an Stockwerkabschnitt-Bauteilmodell-Datensätzen oder Schachtabschnitt-Bauteilmodell-Datensätzen abgebildet und den Messdaten entsprechend, deren Stockwerkabstand beziehungsweise deren Stockwerkhöhe angepasst. Ein solcher dreidimensionaler, Digitaler-Doppelgänger-Datensatz bietet nun die perfekte Simulationsumgebung im Sinne des «Hardware in the loop» Ansatzes, um beispielsweise vor einem Austausch der Aufzugssteuerung die neue Aufzugssteuerung zu programmieren und auszutesten. Je umfassender und präziser die bestehende Personentransportanlage im zugeordneten dreidimensionalen Digitaler-Doppelgänger-Datensatz abgebildet ist, desto besser sind natürlich auch die Simulationsergebnisse.

In einer Ausgestaltung der Erfindung kann jeder Stockwerkabschnitt-Bauteilmodell-Datensatz beziehungsweise jeder Schachtabschnitt-Bauteilmodell-Datensatz vordefinierte Schnittstellen aufweisen, über welche Schnittstellen Bauteilmodell-Datensätze miteinander verbunden und zueinander positioniert werden können. Hierbei werden korrespondierende charakterisierende Eigenschaften jedes anzufügenden Bauteilmodell-Datensatzes mit den charakterisierenden Eigenschaften des über die Schnittstelle zur Verbindung vorgesehenen Bauteilmodell-Datensatzes automatisch repliziert. Mit replizieren ist ein Vorgang gemeint, der die charakterisierenden Eigenschaften zweier miteinander verbundener Bauteilmodell-Datensätze zueinander abgleicht, wenn diese dieselben charakterisierenden Eigenschaften betreffen. Beispielsweise werden im Falle der Verwendung von Schachtabschnitt-Bauteilmodell-Datensätzen die den Schachtquerschnitt definierenden, charakterisierenden Eigenschaften «Tiefe» und «Breite» der über die Schnittstellen miteinander verbundenen Schachtabschnitt-Bauteilmodell-Datensätze repliziert, da ein Aufzugsschacht üblicherweise über seine ganze Höhe denselben Schachtquerschnitt aufweist. Auch andere charakterisierende Eigenschaften wie die Materialeigenschaften der Schachtwände können über alle Schachtabschnitt-Bauteilmodell-Datensätze hinweg repliziert werden.

Die Stockwerkhöhen können jedoch sehr unterschiedlich sein und können zum Beispiel als nicht replizierbar definiert sein, wenn sie nicht einander anliegend und daher nicht korrespondierend angeordnet sind. Die Replizierungsanweisungen können in einem speziellen Regelsatz für jeden Bauteilmodell-Datensatz hinterlegt sein. Grundsätzlich kann in diesen Replizierungsanweisungen festgelegt sein, dass beim Replizieren durch Messwerte definierte, charakterisierende Eigenschaften Vorrang gegenüber durch Vorgabe-Werte definierte charakterisierenden Eigenschaften haben.

In einer weiteren Ausgestaltung der Erfindung kann jeder Stockwerkabschnitt-Bauteilmodell-Datensatz vordefinierte Schnittstellen aufweisen und mit diesen Schnittstellen jeweils ein als Schachtabschnitt-Bauteilmodell-Datensatz konfigurierter Bauteilmodell-Datensatz verbunden werden. Der Schachtabschnitt-Bauteilmodell-Datensatz ist ebenfalls in seinen Dimensionen durch Vorgabe-Werte charakterisiert, die logischerweise nicht den Dimensionen der zugeordneten Aufzugsanlage entsprechen. Beim Verbinden wird nun der Vorgabe-Wert einer charakterisierenden Eigenschaft des mit dessen Schnittstellen verbundenen Schachtabschnitt-Bauteilmodell-Datensatzes, der die die Schachtabschnittshöhe definiert, durch den Höhenabstand des mit diesem verbundenen Stockwerkabschnitt-Bauteilmodell-Datensatzes ersetzt und damit repliziert.

In einer weiteren Ausgestaltung der Erfindung kann jeder Stockwerkabschnitt-Bauteilmodell-Datensatz vordefinierte Schnittstellen aufweisen und ein als Schacht-Bauteilmodell-Datensatz konfigurierter Bauteilmodell-Datensatz mit den Schnittstellen aller Stockwerkabschnitt-Bauteilmodell-Datensätze verbunden werden. Hierbei können die Höhenabstände aller Stockwerkabschnitt-Bauteilmodell-Datensätze zu einer Gesamthöhe addiert, und diese Gesamthöhe den Vorgabe-Wert der entsprechenden charakterisierenden Eigenschaft des mit den Schnittstellen verbundenen Schacht-Bauteilmodell-Datensatzes im Sinne einer Replizierung korrespondierender charakterisierender Eigenschaften ersetzt werden.

In einer weiteren Ausführung der Erfindung kann ein als Aufzugskabinen-Bauteilmodell-Datensatz konfigurierter Bauteilmodell-Datensatz im durch mindestens einen Schachtabschnitt-Bauteilmodell-Datensatz gebildeten, virtuellen Schacht angeordnet werden. Die einzelnen, bei der Messfahrt aufgezeichneten Bewegungsprofile der Aufzugskabine können hierbei dem Aufzugskabinen-Bauteilmodell-Datensatz in der Rangordnung der Stockwerke als charakterisierende Eigenschaften zugeordnet werden. Das bedeutet, dass bestimmte Bauteilmodell-Datensätze, die bewegbare Bauteile der bestehenden Aufzugsanlage repräsentieren, auch dynamische, charakterisierende Eigenschaften aufweisen können und somit genaugenommen vierdimensional charakterisiert sind. Dem entsprechend weist eine solches, als charakterisierende Eigenschaft hinterlegtes Bewegungsprofil mindestens einen Bewegungsrichtungsvektor auf, der die Bewegungsrichtung des zugeordneten Bauteilmodell-Datensatzes relativ zu statischen Bauteilmodell-Datensätzen wie beispielsweise die Schachtabschnitt-Bauteilmodell-Datensätze angibt. Ferner kann das Bewegungsprofil auch das gesamte Bewegungsspektrum über die als Stockwerkhöhe oder mehrere Stockwerkhöhen definierte, zurückzulegende Strecke aufweisen. Das Bewegungsprofil bildet hierbei die Beschleunigungsphase, die Fahrphase mit konstanter Geschwindigkeit und die Verzögerungsphase ab.

In einer weiteren Ausführung der Erfindung können räumliche Dimensionen der bestehenden Aufzugskabine als Messwerte erfasst und die Vorgabe-Werte der zugeordneten, charakterisierenden Eigenschaften des Aufzugskabinen-Bauteilmodell-Datensatzes durch die gemessenen räumlichen Dimensionen ersetzt werden. Des Weiteren können hernach mittels einer Kollisionsprüfungsroutine die charakterisierenden Eigenschaften des mindestens Aufzugskabinen-Bauteilmodell-Datensatzes überprüft und bei kollidierenden Dimensionen entsprechende charakterisierende Eigenschaften des mindestens einen Schachtabschnitt-Bauteilmodell-Datensatzes den zu Kollisionen führenden Überragungen des Aufzugskabinen-Bauteilmodell-Datensatzes angepasst werden.

Mit anderen Worten wird der Schachtquerschnitt des mindestens Aufzugskabinen-Bauteilmodell-Datensatzes automatisiert zumindest auf die Bodenfläche der Aufzugskabine ausgedehnt. Hierbei kann die Anpassung mittels einer Anpassungsroutine erfolgen, die für den Schachtquerschnitt übliche Abstände zu den Kabinenwänden und gegebenenfalls auch einen Querschnittzuschlag für einen Gegengewicht--Bauteilmodell-Datensatz vorsieht.

Wie bereits weiter oben erwähnt, kann der dreidimensionale Digitaler-Doppelgänger-Datensatz für dynamische Simulationen verwendet werden. Beispielsweise kann in einer weiteren Ausführung der Erfindung der dreidimensionale Digitaler-Doppelgänger-Datensatz aus einem Speichermedium abgerufen und als virtuelle Aufzugsanlage zumindest die Höhenabstände der Stockwerke im richtigen Verhältnis zueinander wiedergebend, statisch und/oder dynamisch auf einem Bildschirm dargestellt werden.

Der die bestehende Aufzugsanlage erfassende Techniker kann aber auch die Aufzugsanlage begehen und beispielsweise die Schachtgrube, den Schachtkopf und den Querschnitt des Schachtes ausmessen und die entsprechenden Vorgabe-Werte der von diesen Messdaten betroffenen Bauteilmodell-Datensätze über eine Eingabeschnittstelle des weiter unten beschriebenen Systems zur Erfassung und Bearbeitung von Aufzugsdaten einer bestehenden Aufzugsanlage, eingeben. Gegebenenfalls verfügt der Techniker als Teil der Messeinrichtung auch über ein Laser-Distanzmessgerät, welches drahtlos mit der Eingabeschnittstelle kommunizieren kann, so dass eine Übernahme der Messwerte teilautomatisiert erfolgt. Hierbei kann der Techniker beispielsweise durch Bildschirmanweisungen auf einer Ausgabeschnittstelle des Systems, schrittweise durch die Messfahrt und die Erfassung weiterer charakterisierender Eigenschaften der bestehenden Aufzugsanlage geführt werden.

In einer weiteren Ausführung der Erfindung können über ein Graphical-User-Interface (GUI) weitere Bauteilmodell-Datensätze von Komponenten einer Aufzugsanlage aus einer Datenbank ausgewählt und über vordefinierte Schnittstellen in den dreidimensionaler Digitaler-Doppelgänger-Datensatz eingefügt werden. Die Auswahl kann hierbei teilautomatisiert durch den Techniker erfolgen, indem ihm beispielsweise das System aufgrund der erfassten und zu charakterisierenden Eigenschaften verarbeiteten Messdaten geeignete Komponenten vorschlägt. Die Auswahl kann aber auch dadurch erfolgen, dass der Techniker mit einem geeigneten Lesegerät des Systems Erkennungszeichen verbauter Komponenten wie beispielsweise Seriennummern, Barcodes, Matrixcodes, RFID-Tags und dergleichen mehr einliest. Aufgrund der erfassten Erkennungszeichen erscheinen auf dem Graphical-User-Interface nur Komponenten, die mit diesen Erkennungszeichen übereinstimmen. Der Techniker kann diese dann beispielsweise per «drag and drop»-Funktionen in einer dreidimensionalen virtuellen Darstellung des Digitaler-Doppelgänger-Datensatzes an der richtigen Stelle einfügen. Es besteht aber auch die Möglichkeit, dass mittels einer Time-of-Flight-Kamera oder einem Laserscanner aufgenommene Bilder und Bildsequenzen durch ein Bilddatenverarbeitungsprogramm verarbeitet werden können, wobei durch diese Verarbeitung in der Aufzugsanlage verbaute Komponenten identifiziert und deren entsprechende Bauteilmodell-Datensätze direkt in den dreidimensionalen Digitaler-Doppelgänger-Datensatz eingefügt oder auf dem Graphical-User-Interface vorgeschlagen werden können.

Als Bauteilmodell-Datensätze von Komponenten können beispielsweise Gegengewicht-, Führungsschienen-, Schachttüren-, Kabinentüren-, Antriebs-Bauteilmodell-Datensätze und Tragmittel-Bauteilmodell-Datensätze in verschiedenen Tragmittelführungsvarianten ausgewählt werden.

In einer weiteren Ausführung der Erfindung, können die durch Messdaten definierten charakterisierenden Eigenschaften mit einer Kennzeichnung versehen werden, so dass sie von charakterisierenden Eigenschaften mit Vorgabe-Werten unterscheidbar sind.

In einer weiteren Ausführung der Erfindung kann ein Bauteilmodell-Datensatz des Digitaler-Doppelgänger-Datensatzes durch einen definitiven Bauteilmodell-Datensatz ersetzt werden, indem dessen mit einer Kennzeichnung versehene charakterisierenden Eigenschaften durch eine Austauschrutine ausgelesen werden, anhand dieser gekennzeichneten, charakterisierenden Eigenschaften aus einer Datenbank mögliche, zu den charakterisierenden Eigenschaften passende, definierte Bauteilmodell-Datensätze real existierender Komponenten von Aufzugsanlagen ermittelt werden, und der ersetzende Bauteilmodell-Datensatz gegebenenfalls durch manuelle Eingaben ergänzend ausgewählt wird. Nach erfolgter Auswahl des passenden, ersetzenden Bauteilmodell-Datensatzes wird der entsprechende Bauteilmodell-Datensatz des Digitaler-Doppelgänger-Datensatzes gelöscht und der ersetzende Bauteilmodell-Datensatz an den entsprechenden Schnittstellen des Digitaler-Doppelgänger-Datensatzes eingefügt, die der gelöschte Bauteilmodell-Datensatz freigegeben hat.

Wie bereits weiter oben mehrmals erwähnt wurde, ist erfindungsgemäss ein System zur Erfassung und Bearbeitung von Aufzugsdaten einer bestehenden Aufzugsanlage vorgesehen, mit dem die vorangehend beschriebenen Verfahren durchgeführt werden können. Das System weist mindestens eine Messeinrichtung auf, mittels der durch mindestens eine Messfahrt mit einer bestehenden Aufzugsanlage zumindest diejenigen Messdaten erfassbar sind, aus denen Stockwerkhöhen der Stockwerke der Aufzugsanlage ermittelbar sind. Dazu gehört beispielsweise das Bewegungsprofil und die Fahrzeit zwischen den Stockwerken, aus denen die Stockwerkhöhen berechnet werden können. Selbstverständlich können die Stockwerkhöhen auch aus Daten der Aufzugssteuerung der bestehenden Aufzugsanlage ermittelt werden, beispielsweise aus einem mit der Aufzugssteuerung verbundenen Schachtinformationssystem, aus Sensorsignalen, die von mit der Aufzugssteuerung verbundenen Sensoren der bestehenden Aufzuganlage generiert werden und dergleichen mehr. Die Messeirichtung kann ein speziell für diesen Zweck ausgebildetes Gerät sein, das über Datenspeicherressourcen wie RAM, ROM, EPROM, Festplattenspeicher, SDRAM und dergleichen mehr, Datenverarbeitungsressourcen wie, Prozessoren Prozessornetzwerke und dergleichen mehr, Schnittstellen wie eine Eingabeschnittstelle und eine Ausgabeschnittstelle sowie Geräteschnittstellen, welche die Kommunikation zu anderen Geräten wie beispielsweise zur Aufzugssteuerung der bestehenden Aufzuganlage, zur nachfolgend beschriebenen, programmierbaren Vorrichtung des Systems und dergleichen mehr ermöglichen, sowie über Sensoren verfügen kann. Die Messeinrichtung kann aber auch ein Konglomerat von verschiedenen, physisch voneinander getrennten Geräten sein, welche die vorangehend beschriebenen Eigenschaften und Ressourcen in der Summe aufweisen und miteinander Daten austauschen können.

Des Weiteren umfasst das System eine programmierbare Vorrichtung und ein Computerprogrammprodukt mit maschinenlesbaren Programmanweisungen. Hierbei kann die programmierbare Vorrichtung ein Einzelgerät wie beispielsweise ein Personal Computer, ein Laptop, Ein Mobiltelefon, ein Tablet, eine Aufzugssteuerung einer Aufzugsanlage oder dergleichen mehr sein. Die programmierbare Vorrichtung kann aber auch einen oder mehrere Computer umfassen. Insbesondere kann die programmierbare Vorrichtung aus einem Computernetzwerk gebildet sein, welches Daten in Form einer Datenwolke (Cloud) verarbeitet. Die programmierbare Vorrichtung kann hierfür über einen Speicher verfügen, in dem die Daten des dreidimensionalen Digitaler-Doppelgänger-Datensatzes und die zu dessen Erstellung erforderlichen Bauteilmodell-Datensätze verschiedener Konfiguration gespeichert werden können, beispielsweise in elektronischer oder magnetischer Form. Die programmierbare Vorrichtung kann ferner über Datenverarbeitungsmöglichkeiten verfügen. Beispielsweise kann die programmierbare Vorrichtung einen Prozessor aufweisen, mithilfe dessen Daten all dieser Datensätze und die maschinenlesbaren Programmanweisungen des Computerprogrammprodukts verarbeitet werden können. Die programmierbare Vorrichtung kann ferner über Datenschnittstellen verfügen, über die Daten in die programmierbare Vorrichtung eingegeben und/oder aus der programmierbaren Vorrichtung ausgegeben werden können. Die programmierbare Vorrichtung kann auch räumlich verteilt implementiert sein, beispielsweise wenn Daten über mehrere Computer verteilt in einer Datenwolke (Cloud) verarbeitet werden.

Insbesondere kann die programmierbare Vorrichtung programmierbar sein, das heißt durch ein geeignet programmiertes Computerprogrammprodukt dazu veranlasst werden, Computer- verarbeitbare Schritte und Daten des erfindungsgemäßen Verfahrens auszuführen oder zu steuern. Das Computerprogrammprodukt kann Anweisungen oder Code enthalten, welche beispielsweise den Prozessor der Vorrichtung dazu veranlassen, Daten des dreidimensionalen Digitaler-Doppelgänger-Datensatzes zu erstellen, abzuspeichern, auszulesen, zu verarbeiten, zu modifizieren, etc. Das Computerprogrammprodukt kann in einer beliebigen Computersprache verfasst sein.

Durch das Ausführen des Computerprogrammprodukts auf der programmierbaren Vorrichtung kann unter Berücksichtigung der durch die Messeinrichtung erfassten Messdaten, ein dreidimensionaler Digitaler-Doppelgänger-Datensatz aus Bauteilmodell-Datensätzen aufgebaut und in einem Speichermedium der programmierbaren Vorrichtung gespeichert werden. Die zu diesem Zwecke aus einer Datenbank, die vorzugsweise ebenfalls in der Datenwolke hinterlegt ist, abrufbaren Bauteilmodell-Datensätze weisen unterschiedliche Konfigurationen auf und sind durch charakterisierende Eigenschaften definiert, die mit Vorgabe-Werten vordefiniert sind.

Bei der Erstellung des dreidimensionaler Digitaler-Doppelgänger-Datensatz wird insbesondere für jedes durch die Messfahrt erfasste Stockwerk der Aufzugsanlage in der erfassten Reihenfolge im durch die programmierbare Vorrichtung erstellten dreidimensionaler Digitaler-Doppelgänger-Datensatz jeweils ein als Stockwerkabschnitt-Bauteilmodell-Datensatz oder Schachtabschnitt- Bauteilmodell-Datensatz konfigurierter Bauteilmodell-Datensatz in vertikaler Richtung übereinander angeordnet. Um die bestehende Aufzugsanlage korrekt in digitaler Form wiederzugeben, wird jeweils der Vorgabe-Wert von dessen charakterisierender Eigenschaft, die den Höhenabstand zum nächsten Stockwerkabschnitt- Bauteilmodell-Datensatz definiert, durch den entsprechenden, aus den Messdaten ermittelte Stockwerkhöhe ersetzt.

Um die Erfassung der relevanten Parameter zu erleichtern, kann die Messeinrichtung auch mit der Aufzugssteuerung der bestehenden Aufzugsanlage verbunden sein. Hierdurch ist die Messeinrichtung in der Lage, charakterisierende Eigenschaften aus der Aufzugssteuerung zu extrahieren und an die programmierbare Vorrichtung des Systems zu übertragen.

Zusammenfassend kann gesagt werden, dass das Computerprogrammprodukt maschinenlesbare Programmanweisungen umfasst, welche bei Ausführung auf einer programmierbaren Vorrichtung die Vorrichtung zum Durchführen oder Steuern der weiter oben beschriebenen Ausführungen des erfindungsgemässen Verfahrens veranlassen.

Das Computerprogrammprodukt kann auf einem beliebigen computerlesbaren Medium gespeichert sein, beispielsweise einem Flash-Speicher, einer CD, einer DVD, RAM, ROM, PROM, EPROM, einer Diskette und dergleichen mehr. Das Computerprogrammprodukt und/oder die damit zu verarbeitenden Daten können auch auf einem Server oder mehreren Servern gespeichert sein, beispielsweise in einer Datenwolke, von wo aus sie über ein Netz, beispielsweise das Internet, heruntergeladen werden können.

Abschließend wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale in geeigneter Weise kombiniert, übertragen, angepasst oder ausgetauscht werden können, um zu weiteren Ausführungsformen der Erfindung zu gelangen.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
- Figur 1:: schematisch in dreidimensionaler Ansicht eine bestehende Aufzugsanlage, wobei deren Aufzugsschacht der besseren Übersicht wegen nur schematisch dargestellt ist und die mit der Aufzugsanlage zu verbindenden Stockwerke nur mit unterbrochener Linie angedeutet sind;
- Figur 2A bis 2D:: schematisch die erfindungsgemässen Verfahrensschritte zur Erstellung eines dreidimensionalen Digitaler-Doppelgänger-Datensatzes der in der Figur 1 dargestellten, bestehenden Aufzugsanlage;
- Figur 3:: schematisch in dreidimensionaler Ansicht die wesentlichen, Komponenten eines Systems, das zur Durchführung des in den Figuren 2A bis 2D dargestellten Verfahrens geeignet ist.

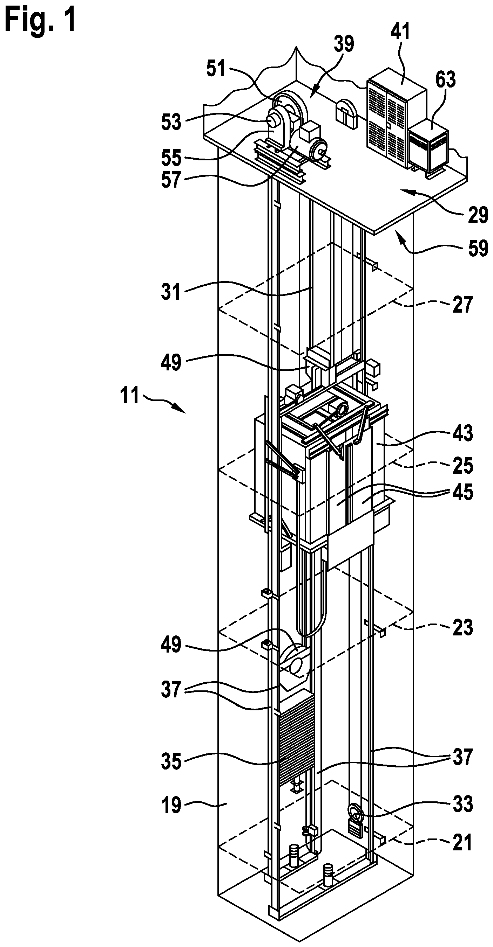

Die Figur 1 zeigt schematisch in dreidimensionaler Ansicht eine bestehende Aufzugsanlage 11, wobei deren Aufzugsschacht 19 der besseren Übersicht wegen nur schematisch dargestellt ist und die bauseitig erstellten, mit der Aufzugsanlage 11 zu verbindenden Stockwerke 21, 23, 25, 27 nur mit unterbrochener Linie angedeutet sind.

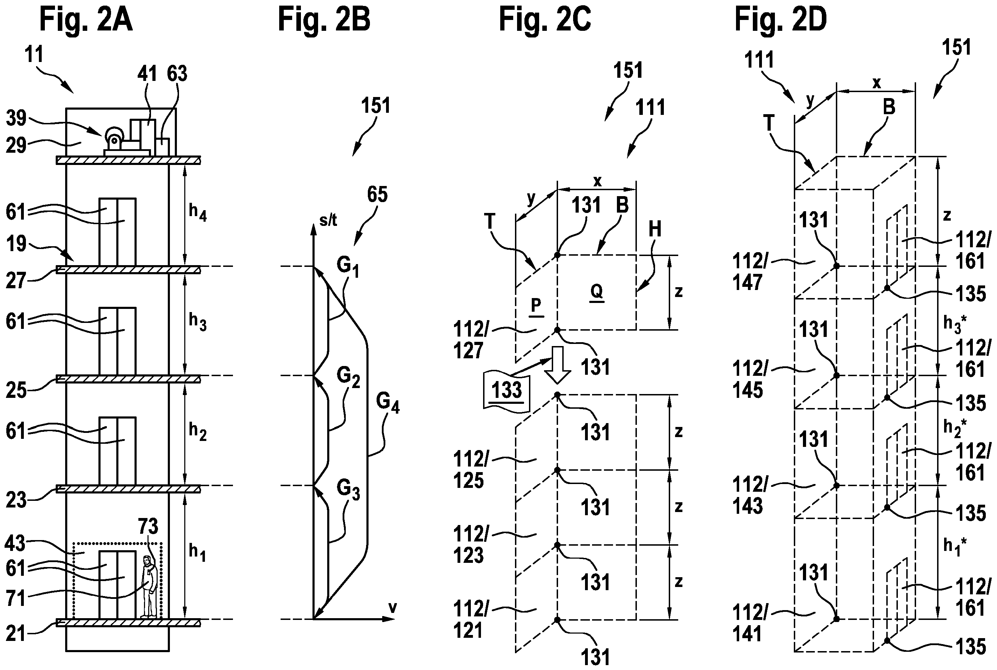

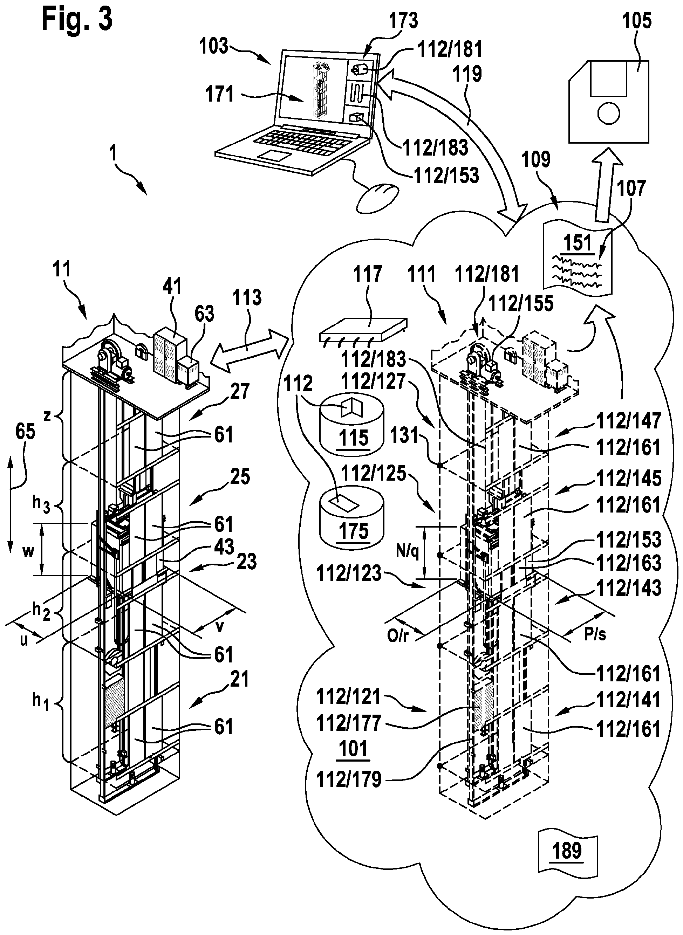

Die Aufzugsanlage 11 besteht aus vielen verschiedenen Komponenten, die im üblicherweise im bauseitig erstellten Aufzugsschacht 19 angeordnet sind. Zu diesen gehören auch alle in diesem Absatz aufgeführten Komponenten, wie beispielsweise an den Wänden des Aufzugschachtes 19 montierte Führungsschienen 37, eine an den Führungsschienen 37 geführte Aufzugskabine 43 und ein an den Führungsschienen 37 geführtes Gegengewicht 35. Das Gegengewicht 35 ist durch ein Tragmittel 31, beispielsweise ein Stahlseil oder ein Riemen mit der Aufzugskabine 43 lasttragend verbunden. Das Tragmittel 31 ist im vorliegenden Ausführungsbeispiel in einer sogenannten 2:1 Tragmittelanordnung über Umlenkrollen 49 und eine Treibscheibe 51 geführt. Selbstverständlich sind auch andere Tragmittelführungsvarianten wie eine 1:1, 3:1 und dergleichen mehr möglich. Die Treibscheibe 51 wird durch eine Antriebseinheit 39 angetrieben, welche üblicherweise eine Betriebsbremse 53, ein Untersetzungsgetriebe 55 und einen Antriebsmotor 57 umfasst. Der Antriebsmotor 57 wird hierbei durch eine Aufzugssteuerung 41 angesteuert. Im vorliegenden Ausführungsbeispiel sind die Antriebseinheit 39 und die Aufzugssteuerung 41 in einem Maschinenraum 29 angeordnet, der sich genau über dem Schachtkopf 59 des Aufzugsschachtes 19 befindet. Die Aufzugskabine 43 weist Kabinentüren 45 auf, die mit auf den Stockwerken 21, 23, 25, 27 angeordneten Schachttüren 61 (siehe Figuren 2A und 3) temporär koppelbar sind. Zudem sind Sicherheitseinrichtungen 33 vorhanden, die die korrekte Arbeitsweise der bestehenden Aufzugsanlage überwachen.

Anhand der Figuren 2A bis 2D werden nachfolgend mögliche Verfahrensschritte des erfindungsgemässen Verfahrens 151 zur Erfassung und Bearbeitung von Aufzugsdaten einer bestehenden Aufzugsanlage 11 und einer damit einhergehenden Erstellung eines dreidimensionalen Digitaler-Doppelgänger-Datensatzes 111 der in der Figur 1 dargestellten, bestehenden Aufzugsanlage 11 erklärt. Hierbei zeigt die Figur 2A nochmals die bestehende Aufzugsanlage 11 in vereinfachter Weise, wobei nur die Aussenkonturen des Aufzugschachtes 19, die Böden der Stockwerke 21, 23, 25, 27, die Aufzugskabine 43 und die Schachttüren 61 sowie der Maschinenraum 29 dargestellt sind.

Gemäss einer möglichen Ausgestaltung der Erfindung wird wie die Figur 2B zeigt, durch mindestens eine Messfahrt 65 mit der Aufzugskabine 43 der bestehenden Aufzugsanlage 11 jedes Stockwerk 21, 23, 25, 27 der Aufzugsanlage 11 zumindest einmal angefahren und mittels einer Messeinrichtung 63 zumindest diejenigen Messdaten G1, G2, G3, G4, h1, h2, h3 erfasst, die Stockwerkhöhen h1, h2, h3 repräsentieren. Im vorliegenden Ausführungsbeispiel ist die Messeinrichtung 63 ein Datenaufzeichnungsgerät, welches die Messdaten G1, G2, G3, G4, h1, h2, h3 von der Aufzugssteuerung 41 empfängt oder aus Steuersignalen und an die Aufzugssteuerung 41 übermittelten Sensordaten von in der Aufzugsanlage 11 verbauten Sensoren extrahiert und abspeichert, beziehungsweise diese Messdaten G1, G2, G3, G4, h1, h2, h3 weiterleiten kann. Hierzu kann die Messeinrichtung 63 über ein geeignetes Computerprogramm verfügen, welches auf die Aufzugssteuerung 41 der bestehenden Aufzugsanlage 11 einwirkt und die erforderliche Messfahrt 65 veranlasst. Hierbei können beispielsweise die Stockwerkhöhen h1, h2, h3 direkt als Messdaten h1, h2, h3 aus den Steuersignalen der Aufzugssteuerung 41 ausgelesen werden, die beispielsweise von einem nicht dargestellten Schachtinformationssystem der bestehenden Aufzugsanlage 11 an die Aufzugssteuerung 41 übermittelt werden. Ferner können die Bewegungsprofile als Messdaten G1, G2, G3, G4 erfasst werden. Da diese die Geschwindigkeit V der Aufzugskabine 43 über die Zeit t wiedergeben, können aus diesen Messdaten G1, G2, G3, G4 selbstverständlich auch die Stockwerkhöhen h1, h2, h3 berechnet werden.

Selbstverständlich kann die Messfahrt 65 auch durchgeführt werden, ohne dass dazu Messdaten G1, G2, G3, G4, h1, h2, h3 aus der Aufzugssteuerung 41 der bestehenden Aufzugsanlage 11 ausgelesen werden. Hierzu kann beispielsweise ein Techniker 71 mit seinem Mobiltelefon (Smartphone) die Aufzugskabine 43 betreten und die Messfahrt 65 mit der bestehenden Aufzugsanlage 11 durchführen. Dabei zeichnet das Mobiltelefon als Messeinrichtung 73 das Beschleunigungs- und Verzögerungsprofil sowie die Fahrzeit von Stockwerk zu Stockwerk beziehungsweise die Bewegungsprofile als Messdaten G1, G2, G3, G4 auf. Vorzugsweise legt er bei der Messfahrt 65 das Mobiltelefon beziehungsweise die Messeinrichtung 73 auf den Boden der Aufzugskabine 43, um die Messdaten G1, G2, G3, G4 nicht zu verfälschen. Aus diesen Messdaten G1, G2, G3, G4 können wiederum die Stockwerkhöhen h1, h2, h3 der einzelnen Stockwerke 21, 23, 25, 27 errechnet werden.

Wie in der Figur 2C dargestellt ist, kann unter Berücksichtigung dieser Messdaten G1, G2, G3, G4, h1, h2, h3 ein dreidimensionaler Digitaler-Doppelgänger-Datensatz 111 schrittweise aus Bauteilmodell-Datensätzen 112 aufgebaut und in einem Speichermedium 101 (siehe Figur 3) gespeichert werden. Die Bauteilmodell-Datensätze 112 können unterschiedliche Konfigurationen aufweisen und sind durch charakterisierende Eigenschaften B, T, H definiert, die mit Vorgabe-Werten x, y, z vordefiniert sind.

Die das Wesen der Bauteilmodell-Datensätze 112 definierenden, charakterisierenden Eigenschaften B, T, H können beispielsweise geometrische Abmessungen der durch sie abgebildeten Bauteile, Gewichte der durch sie abgebildeten Bauteile, Materialeigenschaften der durch sie abgebildeten Bauteile und/oder Oberflächenbeschaffenheiten der durch sie abgebildeten Bauteile sein. Selbstverständlich können auch dynamische Informationen wie die bereits erwähnten Bewegungsprofile als charakterisierende Eigenschaften einem Bauteilmodell-Datensatz 112 zugeordnet werden und dessen dynamisches Verhalten charakterisieren. Mit anderen Worten können mehrere verschiedenartige charakterisierende Eigenschaften B, T, H von einem Bauteil oder von mehreren Bauteilen der Aufzugsanlage 11 ermittelt werden und als Messdaten G2, G3, G4, h1, h2, h3 in dem dreidimensionaler Digitaler-Doppelgänger-Datensatz 111 abgelegt werden. Geometrische Abmessungen der Bauteile können beispielsweise eine Länge, eine Breite, eine Höhe, eine Tiefe, ein Querschnitt, Radien, Verrundungen, etc. der Bauteile sein. Materialeigenschaften der Bauteile können beispielsweise eine zur Bildung eines Bauteils oder eines Teilbereichs eines Bauteils verwendete Materialart sein. Ferner können Materialeigenschaften auch Festigkeitseigenschaften, Härteeigenschaften, elektrische Eigenschaften, magnetische Eigenschaften, optische Eigenschaften, etc. der Bauteile sein. Oberflächenbeschaffenheiten der Bauteile können beispielsweise Rauigkeiten, Texturen, Beschichtungen, Farben, Reflektivitäten, etc. der Bauteile sein.

Die charakterisierenden Eigenschaften B, T, H können sich auf einzelne Bauteile oder Bauteilgruppen beziehen. Beispielsweise können sich die charakterisierenden Eigenschaften B, T, H auf einzelne Bauteile beziehen, aus denen größere, komplexere Bauteilgruppen zusammengesetzt werden. Alternativ oder ergänzend können sich die charakterisierenden Eigenschaften B, T, H auch auf aus mehreren Bauteilen zusammengesetzte komplexere Gerätschaften wie zum Beispiel Antriebsmotoren, Getriebeeinheiten, Tragmittel, etc. beziehen.

Um den dreidimensionaler Digitaler-Doppelgänger-Datensatz 111 aufzubauen, kann beispielsweise für jedes, durch die Messfahrt 65 erfasste Stockwerk 21, 23, 25, 27 der Aufzugsanlage 11 in der erfassten Reihenfolge jeweils ein als Stockwerkabschnitt-Bauteilmodell-Datensatz 121, 123, 125, 127 konfigurierter Bauteilmodell-Datensatz 112 in vertikaler Richtung übereinander angeordnet werden, wobei hierzu vorzugsweise Schnittstelleninformationen 131 am Stockwerkabschnitt-Bauteilmodell-Datensatz 121, 123, 125, 127 definiert sind, die beispielsweise mithilfe eines Regelsatzes 133 korrekt zueinander positioniert und zusammengefügt werden. Wie bereits erwähnt, sind Bauteilmodell-Datensätze 112 durch charakterisierende Eigenschaften B, T, H definiert und diese charakterisierenden Eigenschaften B, T, H wiederum durch Vorgabe-Werte x, y, z vordefiniert. Im vorliegenden Ausführungsbeispiel der Figur 2C werden die Stockwerkabschnitt-Bauteilmodell-Datensätze 121, 123, 125, 127 durch zwei rechtwinklig zueinander angeordnete Flächen P und Q definiert, wobei deren flächige Ausdehnungen jeweils durch die charakterisierenden Eigenschaften Breite B, Tiefe T, und Höhe H mit einem entsprechenden Vorgabe-Wert x, y, z vordefiniert sind. Dem entsprechend bildet dieser dreidimensionale Digitaler-Doppelgänger-Datensatz 111 beziehungsweise das so geschaffene, dreidimensional darstellbare, virtuelle Modell erst einmal nur die Anzahl Stockwerke 21, 23, 25, 27 der Aufzugsanlage 11 korrekt ab.

Wie die Figur 2D zeigt, wird der dreidimensionale Digitaler-Doppelgänger-Datensatz 111 beziehungsweise dieses dreidimensional darstellbare, virtuelle Modell nun schrittweise verfeinert und präzisiert, indem der Vorgabe-Wert z der charakterisierenden Eigenschaft Höhe H, eines jeden Stockwerkabschnitt-Bauteilmodell-Datensatzes 121, 123, 125, 127 die den Höhenabstand zum nächsten Stockwerkabschnitt- Bauteilmodell-Datensatz definiert, durch die entsprechenden, aus den Messdaten G1, G2, G3, G4, h1, h2, h3 ermittelten Stockwerkhöhen h1, h2, h3 ersetzt wird. Anhand der in Figur 2D dargestellten Stockwerkhöhen h1, h2, h3 ist ersichtlich, dass sich diese zu den Vorgabe-Werten x, y, z der Figur 2C sowie auch untereinander deutlich unterscheiden. Ferner ist ersichtlich, dass die Stockwerkhöhe h4 des obersten Stockwerkes 27 nicht durch die mittels einer Messfahrt 65 ermittelten Messdaten G1, G2, G3, G4, h1, h2, h3 berechnet beziehungsweise definiert werden kann. Diese Stockwerkhöhe h4 muss beispielsweise der Techniker händisch ausmessen und als Messdaten h4 erfassen oder dessen Vorgabe-Wert z bleibt vorerst beibehalten, bis weitere Messdaten zu dieser charakterisierenden Eigenschaft Höhe H des obersten Stockwerkes 27 vorliegen. Diejenigen charakterisierenden Eigenschaften B, T, H, deren Vorgabe-Werte x, y, z durch Messdaten G1, G2, G3, G4, h1, h2, h3 ersetzt wurden, können wie im vorliegenden Ausführungsbeispiel symbolisch mit einem Stern als h1*, h2*, h3* dargestellt, mit einer Kennzeichnung versehen werden. Eine solche Kennzeichnung kann ein Code-Abschnitt, ein Präfix, ein Suffix und dergleichen mehr sein.

Wie vorangehend erörtert, weist jeder Stockwerkabschnitt-Bauteilmodell-Datensatz 121, 123, 125, 127 vordefinierte Schnittstellen 131 auf. Diese dienen nicht nur bei der Zusammenfügung der Stockwerkabschnitt-Bauteilmodell-Datensätze 121, 123, 125, 127 als gegenseitige Positionierungspunkte, sondern auch als Schnittstellen 131 bei der Anfügung weiterer Bauteilmodell-Datensätze 112. An diese Schnittstellen 131 kann nun wie die Figur 2D zeigt, jeweils auch ein als Schachtabschnitt-Bauteilmodell-Datensatz 141, 143, 145, 147 konfigurierter Bauteilmodell-Datensatz 112 angefügt werden. Dabei wird jeweils der Vorgabe-Wert x, y, z einer charakterisierenden Eigenschaft B, T, H des mit dessen Schnittstellen 131 verbundenen Schachtabschnitt-Bauteilmodell-Datensatzes 141, 143, 145, 147, welche die Schachtabschnittshöhe definiert, durch die entsprechende Stockwerkhöhe h1, h2, h3 des Stockwerkabschnitt-Bauteilmodell-Datensatzes 121, 123, 125, 127 ersetzt beziehungsweise repliziert.

Selbstverständlich besteht auch die Möglichkeit, anstelle der vorangehend beschriebenen Stockwerkabschnitt-Bauteilmodell-Datensätze 121, 123, 125, 127, als Bauteilmodell-Datensätze 112 direkt einen Schacht-Bauteilmodell-Datensatz oder mehrere Schacht-Bauteilmodell-Datensätze 141, 143, 145, 147 zu verwenden. Diese weisen vorzugsweise ebenfalls die charakterisierenden Eigenschaften B, T, H im Sinne der Stockwerkabschnitt-Bauteilmodell-Datensätze 121, 123, 125, 127 und die Schnittstellen 131 auf, um den dreidimensionalen Digitaler-Doppelgänger-Datensatz 111 korrekt erstellen zu können und zumindest die Anzahl Stockwerke und die Stockwerkhöhen h1, h2, h3, z korrekt wiederzugeben.

Grundsätzlich kann jeder Bauteilmodell-Datensatz 112 seiner Konfiguration entsprechend mehrere Schnittstellen 131, 135 zur Anfügung weiterer Bauteilmodell-Datensätze 112 aufweisen. So können zum Beispiel die Schachtabschnitt-Bauteilmodell-Datensätze 141, 143, 145, 147 nebst der zu den Stockwerkabschnitt-Bauteilmodell-Datensätzen 141, 143, 145, 147 und/oder zueinander passenden Schnittstellen 131 auch Schnittstellen 135 für Schachttür- Bauteilmodell- Datensätze 161 aufweisen.

Die Figur 3 zeigt schematisch in dreidimensionaler Ansicht die wesentlichen, Komponenten eines Systems 1, das zur Durchführung des in den Figuren 2A bis 2D dargestellten Verfahrens 151 geeignet ist. Dieses System 1 zur Erfassung und Bearbeitung von Aufzugsdaten einer bestehenden Aufzugsanlage 11, weist im Wesentlichen die folgenden Systemteile auf:
- mindestens eine Messeinrichtung 63, mittels der durch mindestens eine Messfahrt 65 mit der bestehenden Aufzugsanlage 11 zumindest diejenigen Messdaten h1, h2, h3 erfassbar sind, aus denen Stockwerkhöhen h1, h2, h3 der Stockwerke 21, 23, 25, 27 der Aufzugsanlage 11 ermittelbar sind;
- eine programmierbare Vorrichtung 101; und
- ein Computerprogrammprodukt 109 mit maschinenlesbaren Programmanweisungen 107.

Wie bereits in der Beschreibung zur Figur 2 erwähnt, greift die Messeinrichtung 63 des dargestellten Ausführungsbeispiels auf Messdaten G1, G2, G3, G4, h1, h2, h3 der Aufzugssteuerung 41 der bestehenden Aufzugsanlage 11 zu und übermittelt diese, symbolisch durch den Doppelpfeil 113 dargestellt, an die programmierbare Vorrichtung 101.

Die programmierbare Vorrichtung 101 kann ein Einzelgerät wie beispielsweise ein Personal Computer, ein Laptop, Ein Mobiltelefon, ein Tablet, die Aufzugssteuerung 41 der bestehenden Aufzugsanlage 11 oder dergleichen mehr sein. Die programmierbare Vorrichtung 101 kann aber auch einen oder mehrere Computer umfassen. Insbesondere kann die programmierbare Vorrichtung 101 wie in der Figur 3 dargestellt, aus einem Computernetzwerk gebildet sein, welches Daten in Form einer Datenwolke (Cloud) verarbeitet. Die programmierbare Vorrichtung 101 kann hierfür über ein Speichermedium 115 verfügen, in dem die Daten des Digitaler-Doppelgänger-Datensatzes 111 und die zu dessen Erstellung erforderlichen Bauteilmodell-Datensätze 112 verschiedener Konfiguration gespeichert werden können, beispielsweise in elektronischer oder magnetischer Form. Die programmierbare Vorrichtung 101 kann ferner über Datenverarbeitungsmöglichkeiten verfügen. Beispielsweise kann die programmierbare Vorrichtung 101 einen Prozessor 117 aufweisen, mithilfe dessen Daten all dieser Bauteilmodell- Datensätze 112 und die maschinenlesbaren Programmanweisungen 107 des Computerprogrammprodukts 109 verarbeitet werden können. Die programmierbare Vorrichtung 101 kann ferner über die symbolisch durch den Doppelpfeil 119 dargestellte Geräteschnittstellen verfügen, über die Daten in die programmierbare Vorrichtung 101 eingegeben und/oder aus der programmierbaren Vorrichtung 101 ausgegeben werden können. Die programmierbare Vorrichtung 101 kann auch räumlich verteilt implementiert sein, beispielsweise wenn Daten über mehrere Computer verteilt in einer Datenwolke (Cloud) verarbeitet werden.

Insbesondere kann die programmierbare Vorrichtung 101 programmierbar sein, das heißt durch ein geeignet programmiertes Computerprogrammprodukt 109 dazu veranlasst werden, Computer- verarbeitbare Schritte und Daten des erfindungsgemäßen Verfahrens 151 auszuführen oder zu steuern. Das Computerprogrammprodukt 109 kann Anweisungen oder Code enthalten, welche beispielsweise den Prozessor 117 der programmierbaren Vorrichtung 101 dazu veranlassen, Daten des dreidimensionalen Digitaler-Doppelgänger-Datensatzes 111 zu erstellen, abzuspeichern, auszulesen, zu verarbeiten, zu modifizieren, etc. Das Computerprogrammprodukt 109 kann in einer beliebigen Computersprache verfasst sein.

Die maschinenlesbaren Programmanweisungen 107 des Computerprogrammproduktes 109 geben die in den Figuren 2A bis 2D beispielhaft dargestellten Verfahrensschritte des erfindungsgemässen Verfahrens 151 in maschinen-verarbeitbarer Weise wieder. Ferner können die maschinenlesbaren Programmanweisungen 107 eine Vielzahl anderer Programmroutinen wie beispielsweise verschiedene Umrechnungsroutinen zur Ermittlung einer Stockwerkhöhe h1, h2, h3 aus einem Bewegungsprofil G1, G2, G3, G4 (siehe Figur 2B), Steuerungsroutinen zur Steuerung der Interaktionen zwischen der Aufzugssteuerung 41 und der Messeinrichtung 63, Zuordnungsroutinen, welche die Anordnung von Bauteilmodell-Datensätzen 112 auf ihre Kompatibilität überprüfen, Positionierungsroutinen, die die genaue Positionierung der Bauteilmodell-Datensätze 112 über die Schnittstellen übernehmen, Regelsätze 133 (siehe Figur 2C), Kollisionsüberprüfungsroutinen, welche statische und dynamische charakterisierende Eigenschaften der im dreidimensionalen Raum angeordneten Bauteilmodell-Datensätze 112 zueinander überprüfen, Übermittlungsprotokolle, Steuerungsroutinen zu den Geräteschnittstellen, Anweisungsroutinen für den Techniker und dergleichen mehr.

Durch das Ausführen des Computerprogrammprodukts 109 auf der programmierbaren Vorrichtung 101, ist unter Berücksichtigung der durch die Messeinrichtung 63 erfassten Messdaten ein dreidimensionaler Digitaler-Doppelgänger-Datensatz 111 aus Bauteilmodell-Datensätzen 112 aufbaubar und im Speichermedium 115 der programmierbaren Vorrichtung 101 speicherbar. Hierbei können die Bauteilmodell-Datensätze 112 unterschiedliche Konfigurationen aufweisen und beispielsweise als Stockwerkabschnitt-Bauteilmodell-Datensatz 121, 123, 125, 127, Schachtabschnitt-Bauteilmodell-Datensatz 141, 143, 145, 147, Aufzugskabinen-Bauteilmodell-Datensatz 153, Kabinentür-Bauteilmodell-Datensatz 163, Schachttür- Bauteilmodell- Datensatz 161 Antrieb-Bauteilmodell-Datensatz 155 und dergleichen mehr ausgestaltet und durch charakterisierende Eigenschaften N, O, P, definiert sein, die mit Vorgabe-Werten q, r, s vordefiniert sind.

Für jedes durch die Messfahrt 65 erfasste Stockwerk 21, 23, 25, 27 der Aufzugsanlage 11 wird in der erfassten Reihenfolge im durch die programmierbare Vorrichtung 101 erstellten dreidimensionaler Digitaler-Doppelgänger-Datensatz 111 jeweils ein als Stockwerkabschnitt-Bauteilmodell-Datensatz 121, 123, 125, 127 konfigurierter Bauteilmodell-Datensatz 112 in vertikaler Richtung übereinander angeordnet, Wie in den Figuren 2A bis 2D dargestellt, wird jeweils der Vorgabe-Wert z von dessen charakterisierender Eigenschaft H, die den Höhenabstand zum nächsten Stockwerkabschnitt- Bauteilmodell-Datensatz definiert, durch die entsprechende, aus den Messdaten G1, G2, G3, G4, h1, h2, h3 ermittelte Stockwerkhöhe h1, h2, h3 ersetzt.

Des Weiteren kann ein als Aufzugskabinen-Bauteilmodell-Datensatz 153 konfigurierter Bauteilmodell-Datensatz im durch mindestens einen Schacht-Bauteilmodell-Datensatz 141, 143, 145, 147 gebildeten, virtuellen Schacht angeordnet werden. Hierbei können auch die einzelnen, bei der Messfahrt 65 aufgezeichneten Bewegungsprofile G1, G2, G3, G4 der Aufzugskabine 43 dem Aufzugskabinen-Bauteilmodell-Datensatz 153 in der Rangordnung der Stockwerke 21, 23, 25, 27 als charakterisierende Eigenschaften zugeordnet werden. Das bedeutet, dass dem Aufzugskabinen-Bauteilmodell-Datensatz 153 dynamische Eigenschaften relativ zu den Schacht-Bauteilmodell-Datensätzen 141, 143, 145, 147 zugeordnet werden, so dass beispielsweise auf einem Bildschirm 171 der dreidimensionaler Digitaler-Doppelgänger-Datensatz 111 mit teils dynamischen beziehungsweise bewegbaren Bauteilmodell-Datensätzen 112 dargestellt werden kann. Mit anderen Worten kann der dreidimensionale Digitaler-Doppelgänger-Datensatz 111 aus dem Speichermedium 115 abgerufen und als virtuelle Aufzugsanlage zumindest die Höhenabstände der Stockwerke im richtigen Verhältnis zueinander wiedergebend, statisch und/oder dynamisch auf einem Bildschirm 171 dargestellt werden. Aufgrund der dynamischen Eigenschaften kann zudem die auf dem Bildschirm 171 durch den Aufzugskabinen-Bauteilmodell-Datensatz 153 dargestellte virtuelle Aufzugskabine innerhalb des durch die Schacht-Bauteilmodell-Datensätze 141, 143, 145, 147 gebildeten virtuellen Aufzugsschachts dieselben Bewegungen mit denselben Bewegungsrichtungen, denselben Beschleunigungen, Geschwindigkeiten und Verzögerungen durchführen, wie die Aufzugkabine 43 der bestehenden Aufzugsanlage 11.

Ferner können durch den Techniker gemessene oder aus Plänen und CAD-Dateien extrahierte, räumliche Dimensionen der bestehenden Aufzugskabine 43 als Messwerte u, v, w erfasst und die Vorgabe-Werte q, r, s der zugeordneten, charakterisierenden Eigenschaften N, O, P des Aufzugskabinen-Bauteilmodell-Datensatzes 153 durch die gemessenen räumlichen Dimensionen ersetzt werden, wobei mittels einer Kollisionsprüfungsroutine die Vorgabe-Werte x, y, z der charakterisierenden Eigenschaften T, B, H der Schachtabschnitt-Bauteilmodell-Datensätze 141, 143, 145, 147 oder des Schacht-Bauteilmodell-Datensatzes überprüft und bei kollidierenden Dimensionen entsprechende charakterisierende Eigenschaften T, B, H den zur Kollisionen führenden Überragungen der charakterisierenden Eigenschaften N, O, P des Aufzugskabinen-Bauteilmodell-Datensatzes 153 angepasst werden. Insbesondere der immer noch durch Vorgabe-Werte x, y definierte Querschnitt der Schachtabschnitt-Bauteilmodell-Datensätze 141, 143, 145, 147 kann für die tatsächlichen Abmessungen der Aufzugskabine 43 zu klein sein. Gegebenenfalls kann zu den Kabinenabmessungen standardmässig ein erforderliches Spiel zwischen den Kabinenwänden und den Schachtwänden addiert werden, um die den Schachtquerschnitt charakterisierenden Eigenschaften T, B der Schachtabschnitt-Bauteilmodell-Datensätze 141, 143, 145, 147 ausgehend von der Aufzugskabine 43 zu ermitteln.

Um die Erstellung des dreidimensionaler Digitaler-Doppelgänger-Datensatzes 111 noch weiter zu vereinfachen, können über ein Graphical-User-Interface 173 einer Eingabeschnittstelle/Ausgabeschnittstelle 103 wie beispielsweise den dargestellten Laptop, weitere Bauteilmodell-Datensätze 112 von Komponenten einer Aufzugsanlage aus einer Datenbank 175 ausgewählt und über vordefinierte Schnittstellen 131, 135 in den dreidimensionalen Digitaler-Doppelgänger-Datensatz 111 eingefügt werden. Zur Auswahl können in der Datenbank 175 als Bauteilmodell-Datensätze 112 abgebildete Komponenten bestehender Aufzugsanlagen 11 zur Verfügung stehen, wie beispielsweise verschiedene Gegengewicht-Bauteilmodell-Datensätze 177, Führungsschienen-Bauteilmodell-Datensätze 179, Schachttüren- Bauteilmodell-Datensätze 161, Kabinentüren- Bauteilmodell-Datensätze 163, Antriebs-Bauteilmodell-Datensätze 181 und Tragmittel-Bauteilmodell-Datensätze 183 in verschiedenen Tragmittelführungsvarianten.

Die aus der Datenbank 175 abrufbaren Bauteilmodell-Datensätze real existierender Bauteile können komplett definierte, auf Messresultate basierende charakterisierende Eigenschaften N, O, P haben. Zur weiteren Verbesserung des Digitaler-Doppelgänger-Datensatzes 111 können dessen Bauteilmodell-Datensätze 112, die gemischte, mit Messdaten u, v, w und Vorgabe-Werten q, r, s definierte charakterisierende Eigenschaften N, O, P aufweisen, durch einen definierten Bauteilmodell-Datensatz 181, 183, 153 aus der Datenbank 175 mit definierten charakterisierenden Eigenschaften N, O, P ersetzt werden. Dies kann automatisiert erfolgen, indem die mit einer Kennzeichnung * versehenen charakterisierenden Eigenschaften N, O, P durch eine Austauschrutine 189 ausgelesen werden und anhand dieser gekennzeichneten, charakterisierenden Eigenschaften aus der Datenbank 175 mögliche, zu den charakterisierenden Eigenschaften N, O, P passende, definierte Bauteilmodell-Datensätze 181, 183, 153 real existierender Komponenten von Aufzugsanlagen 11 ermittelt werden. Anschliessend kann aus diesen vorgeschlagenen definierten Bauteilmodell-Datensätzen 181, 183, 153 der ersetzende Bauteilmodell-Datensatz 112 gegebenenfalls durch manuelle Eingaben ergänzend ausgewählt werden. Nach der Auswahl kann die Austauschrutine 189 automatisch den auszutauschenden Bauteilmodell-Datensatz 112 löschen und den ersetzenden Bauteilmodell-Datensatz 112 einfügen. Gegebenenfalls existieren an Bauteilen der bestehenden Aufzugsanlage 11 auch Erkennungszeichen wie Barcodes, Matrixcodes, RFID-Tags und dergleichen mehr, die durch geeignetes Erfassen im System 1 eine eindeutige Auswahl und Verwendung des dieses Bauteil wiedergebenden Bauteilmodell-Datensatzes 112 ermöglichen.

Das Computerprogrammprodukt 109 kann auf einem beliebigen computerlesbaren Medium 105 gespeichert werden beziehungsweise gespeichert sein.

Obwohl die vorliegende Erfindung in den Figuren 1 bis 3 am Beispiel einer einfachen bestehenden Aufzugsanlage 11 und anhand eines, diese abbildenden einfachen Digitaler-Doppelgänger-Datensatzes 111, welcher nur rudimentär mit wenigen Bauteilmodel-Datensätzen 112 aufgebaut ist, beschrieben wurde, ist es offensichtlich, dass das beschriebene Verfahren 151 und das entsprechende System 1 gleichermaßen auch für komplexer aufgebaute Aufzugsanlagen 11 Anwendung finden. Auch wenn nur eine Aufzugskabine 43 beschrieben und in den Figuren dargestellt ist, kann das erfindungsgemässe System 1 und das erfindungsgemässe Verfahren 151 selbstverständlich auch bei bestehenden Aufzugsanlagen 11 mit mehreren Aufzugskabinen 43 verwendet werden.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können, sofern diese Merkmalskombinationen vom Schutzumfang des nachfolgenden Anspruchssatzes umfasst sind. Bezugszeichen in den Ansprüchen sind nicht als Einschränkung anzusehen.

## Patentansprüche

1. Verfahren (151) zur Erfassung und Bearbeitung von Aufzugsdaten einer bestehenden Aufzugsanlage (11), wobei durch mindestens eine Messfahrt (65) mit der bestehenden Aufzugsanlage (11) jedes Stockwerk (21, 23, 25, 27) der bestehenden Aufzugsanlage (11) zumindest einmal angefahren und mittels einer Messeinrichtung (63, 73) zumindest diejenigen Messdaten (G1, G2, G3, G4, h1, h2, h3) erfasst werden, die Stockwerkhöhen (h1, h2, h3) repräsentieren,
wobei
ein dreidimensionaler Digitaler-Doppelgänger-Datensatz (111) aus Bauteilmodell-Datensätzen (112) aufgebaut und in einem Speichermedium (115) gespeichert wird, wobei die Bauteilmodell-Datensätze (112) unterschiedliche Konfigurationen aufweisen können und durch charakterisierende Eigenschaften (T, B, H) definiert sind, die mit Vorgabe-Werten (x, y, z) vordefiniert sind,
wobei für jedes durch die Messfahrt (65) erfasste Stockwerk (21, 23, 25, 27) der Aufzugsanlage (11) in der erfassten Reihenfolge als Stockwerkabschnitt-Bauteilmodell-Datensatz (121, 123, 125, 127) konfigurierte Bauteilmodell-Datensätze (112) oder als Schachtabschnitt-Bauteilmodell-Datensatz (141, 143, 145, 147) konfigurierte Bauteilmodell-Datensätze (112) in vertikaler Richtung übereinander angeordnet werden und bei diesen jeweils der Vorgabe-Wert (x, y, z) der charakterisierenden Eigenschaft (T, B, H), die den Höhenabstand (h1, h2, h3) zum nächsten Stockwerkabschnitt-Bauteilmodell-Datensatz (121, 123, 125, 127) oder Schachtabschnitt-Bauteilmodell-Datensatz (141, 143, 145, 147) definiert, durch die entsprechende, aus den Messdaten (G1, G2, G3, G4, h1, h2, h3) ermittelte Stockwerkhöhe (h1, h2, h3) ersetzt wird.

2. Verfahren (151) nach Anspruch 1, wobei jeder Stockwerkabschnitt-Bauteilmodell-Datensatz (121, 123, 125, 127) oder jeder Schachtabschnitt-Bauteilmodell-Datensatz (141, 143, 145, 147) vordefinierte Schnittstellen (131, 135) aufweist, über welche Schnittstellen (131, 135) Bauteilmodell-Datensätze (112) miteinander verbunden und zueinander positioniert werden können, wobei korrespondierende charakterisierende Eigenschaften (T, B, H) jedes anzufügenden Bauteilmodell-Datensatzes mit den entsprechenden charakterisierenden Eigenschaften (T, B, H) des über die Schnittstelle (131, 135) zur Verbindung vorgesehenen Bauteilmodell-Datensatzes (112) automatisch repliziert werden.

3. Verfahren (151) nach Anspruch 1 oder 2, wobei ein als Aufzugskabinen-Bauteilmodell-Datensatz (153) konfigurierter Bauteilmodell-Datensatz (112) im durch mindestens einen Schachtabschnitt-Bauteilmodell-Datensatz (141, 143, 145, 147) gebildeten, virtuellen Schacht angeordnet wird und bei der Messfahrt (65) aufgezeichnete Bewegungsprofile (G1, G2, G3, G4) einer bestehenden Aufzugskabine (43) dem Aufzugskabinen-Bauteilmodell-Datensatz (153) in der Rangordnung der Stockwerke (21, 23, 25, 27) als charakterisierende Eigenschaften (G1, G2, G3, G4) zugeordnet werden.

4. Verfahren (151) nach Anspruch 3, wobei räumliche Dimensionen der bestehenden Aufzugskabine (43) als Messwerte (u, v, w) erfasst und die Vorgabe-Werte (q, r, s) der zugeordneten, charakterisierenden Eigenschaften (N, O, P) des Aufzugskabinen-Bauteilmodell-Datensatzes (153) durch die gemessenen räumlichen Dimensionen ersetzt werden, wobei mittels einer Kollisionsprüfungsroutine die Vorgabe-Werte der charakterisierenden Eigenschaften (B, T) der Schachtabschnitt-Bauteilmodell-Datensätze (141, 143, 145, 147) überprüft und bei kollidierenden Dimensionen entsprechende charakterisierende Eigenschaften (B, T) den zur Kollisionen führenden Überragungen angepasst werden.

5. Verfahren (151) nach einem der Ansprüche 1 bis 4, wobei der dreidimensionale Digitaler-Doppelgänger-Datensatz (111) aus einem Speichermedium (115) abgerufen und als virtuelle Aufzugsanlage zumindest die Höhenabstände (h1, h2, h3) der Stockwerke (21, 23, 25, 27) im richtigen Verhältnis zueinander wiedergebend, statisch und/oder dynamisch auf einem Bildschirm (171) dargestellt werden kann.

6. Verfahren (151) nach einem der Ansprüche 1 bis 5, wobei über ein Graphical-User-Interface (173) weitere Bauteilmodell-Datensätze (112) von Komponenten einer Aufzugsanlage (11) aus einer Datenbank (175) ausgewählt und über vordefinierte Schnittstellen (131, 135) in den dreidimensionaler Digitaler-Doppelgänger-Datensatz (111) eingefügt werden können.

7. Verfahren (151) nach Anspruch 6, wobei als Bauteilmodell-Datensätze (112) von Komponenten zumindest aus Gegengewicht- (177), Führungsschienen- (179), Schachttüren- (161), Kabinentüren- (163), Antriebs-Bauteilmodell-Datensätzen (181) und Tragmittel-Bauteilmodell-Datensätzen (183) in verschiedenen Tragmittelführungsvarianten ausgewählt werden kann.

8. Verfahren (151) nach einem der Ansprüche 1 bis 7, wobei die durch Messdaten (G1, G2, G3, G4, h1, h2, h3) definierten charakterisierenden Eigenschaften (B, T, H) mit einer Kennzeichnung (*) versehen werden, so dass sie von charakterisierenden Eigenschaften (B, T, H) mit Vorgabe-Werten (x, y, z) unterschieden werden können.

9. Verfahren (151) nach Anspruch 8, wobei ein Bauteilmodell-Datensatz (112) des Digitaler-Doppelgänger-Datensatzes (111) durch einen definitiven Bauteilmodell-Datensatz ersetzt werden kann, indem dessen mit einer Kennzeichnung (*) versehenen charakterisierenden Eigenschaften (B, T, H) durch eine Austauschrutine ausgelesen werden, anhand dieser gekennzeichneten, charakterisierenden Eigenschaften (B, T, H) aus einer Datenbank (175) mögliche, zu den charakterisierenden Eigenschaften (B, T, H) passende, definierte Bauteilmodell-Datensätze real existierender Komponenten von Aufzugsanlagen (11) ermittelt werden, und der ersetzende Bauteilmodell-Datensatz (112) gegebenenfalls durch manuelle Eingaben ergänzend ausgewählt wird.

10. Aufzugsanlage (11) umfassend ein System (1) zur Erfassung und Bearbeitung von Aufzugsdaten der Aufzugsanlage (11), wobei das System (1) aufweist:
mindestens eine Messeinrichtung (63, 73), mittels der durch mindestens eine Messfahrt (65) mit der Aufzugsanlage (11) zumindest diejenigen Messdaten (G1, G2, G3, G4, h1, h2, h3) erfassbar sind, aus denen Stockwerkhöhen (h1, h2, h3) der Stockwerke (21, 23, 25, 27) der Aufzugsanlage (11) ermittelbar sind;
eine programmierbare Vorrichtung (101); und
ein Computerprogrammprodukt (109) mit maschinenlesbaren Programmanweisungen (107);
**dadurch gekennzeichnet,**
**dass** bei der Messfahrt (65) mit der Aufzugsanlage (11) jedes Stockwerk (21, 23, 25, 27) der Aufzugsanlage (11) zumindest einmal angefahren und mittels einer Messeinrichtung (63, 73) zumindest diejenigen Messdaten (G1, G2, G3, G4, h1, h2, h3) erfasst werden, die Stockwerkhöhen (h1, h2, h3) repräsentieren; und
**dass** durch das Ausführen des Computerprogrammprodukts (109) auf der programmierbaren Vorrichtung (101) unter Berücksichtigung der bei der Messfahrt (65) durch die Messeinrichtung (63, 73) erfassten Messdaten (G1, G2, G3, G4, h1, h2, h3) ein dreidimensionaler Digitaler-Doppelgänger-Datensatz (111) aus Bauteilmodell-Datensätzen (112) aufbaubar und in einem Speichermedium (115) der programmierbaren Vorrichtung (101) speicherbar ist, wobei die Bauteilmodell-Datensätze (112) unterschiedliche Konfigurationen aufweisen können und durch charakterisierende Eigenschaften (B, T, H) definiert sind, die mit Vorgabe-Werten (x, y, z) vordefiniert sind, wobei für jedes durch die Messfahrt (65) erfasste Stockwerk (21, 23, 25, 27) der bestehenden Aufzugsanlage (11) in der erfassten Reihenfolge im durch die programmierbare Vorrichtung (101) erstellten dreidimensionaler Digitaler-Doppelgänger-Datensatz (111) jeweils ein als Stockwerkabschnitt-Bauteilmodell-Datensatz (121, 123, 125, 127) oder Schachtabschnitt- Bauteilmodell-Datensatz (141, 143, 145, 147) konfigurierbarer Bauteilmodell-Datensatz (112) in vertikaler Richtung übereinander angeordnet ist und jeweils der Vorgabe-Wert (x, y, z) von dessen charakterisierender Eigenschaft (B, T, H), die den Höhenabstand (h1, h2, h3) zum nächsten Stockwerkabschnitt- Bauteilmodell-Datensatz (121, 123, 125, 127) oder Schachtabschnitt- Bauteilmodell-Datensatz (141, 143, 145, 147) definiert, durch den entsprechenden, aus den Messdaten (G1, G2, G3, G4, h1, h2, h3) ermittelten Stockwerkhöhe (h1, h2, h3) ersetzt ist, und wobei die Messeinrichtung (63, 73) mit der Aufzugssteuerung (41) der bestehenden Aufzugsanlage (11) verbunden ist und durch die Messeinrichtung (63, 73) charakterisierende Eigenschaften (T, B, H) aus Steuersignalen der Aufzugssteuerung (41) extrahierbar und an die programmierbare Vorrichtung (101) übertragbar sind.

## Claims

1. Method (151) for recording and processing elevator data of an existing elevator installation (11), via at least one measuring run (65) using the existing elevator installation (11), each floor (21, 23, 25, 27) of the existing elevator installation (11) is approached at least once, and by means of a measuring apparatus (63, 73), at least those measurement data (G1, G2, G3, G4, h1, h2, h3) which represent floor heights (h1, h2, h3) are recorded,
wherein
a three-dimensional digital-double dataset (111) is generated from component model datasets (112) and stored in a memory medium (115), wherein the component model datasets (112) can have different configurations and are defined by characterizing properties (T, B, H) which are predefined with default values (x, y, z),
wherein, for each floor (21, 23, 25, 27) of the elevator installation (11) recorded by the measuring run (65), in the recorded sequence, component model datasets (112) configured as a floor portion component model dataset (121, 123, 125, 127) or component model datasets (112) configured as a shaft portion component model dataset (141, 143, 145, 147) are arranged one above the other in the vertical direction, and in each of these cases, the default value (x, y, z) of the characterizing property (T, B, H) which defines the height distance (h1, h2, h3) to the next floor portion component model dataset (121, 123, 125, 127) or shaft portion component model dataset (141, 143, 145, 147) is replaced by the corresponding floor height (h1, h2, h3) determined from the measurement data (G1, G2, G3, G4, h1, h2, h3).

2. Method (151) according to claim 1, wherein each floor portion component model dataset (121, 123, 125, 127) or each shaft portion component model dataset (141, 143, 145, 147) has predefined interfaces (131, 135), via which interfaces (131, 135) component model datasets (112) can be connected to one another and positioned relative to one another, wherein corresponding characterizing properties (T, B, H) of each component model dataset to be added are automatically replicated with the corresponding characterizing properties (T, B, H) of the component model dataset (112) provided for connection via the interface (131, 135).

3. Method (151) according to claim 1 or claim 2, wherein a component model dataset (112) configured as an elevator car component model dataset (153) is arranged in the virtual shaft formed by at least one shaft portion component model dataset (141, 143, 145, 147), and motion profiles (G1, G2, G3, G4), logged during the measuring run (65), of an existing elevator car (43) are assigned as characterizing properties (G1, G2, G3, G4) to the elevator car component model dataset (153) in the hierarchy of the floors (21, 23, 25, 27).

4. Method (151) according to claim 3, wherein spatial dimensions of the existing elevator car (43) are recorded as measured values (u, v, w) and the default values (q, r, s) of the assigned characterizing properties (N, O, P) of the elevator car component model dataset (153) are replaced by the measured spatial dimensions, wherein the default values of the characterizing properties (B, T) of the shaft portion component model datasets (141, 143, 145, 147) are checked by means of a collision checking routine and, in the case of colliding dimensions, corresponding characterizing properties (B, T) are adapted to the projections which lead to collisions.

5. Method (151) according to any of claims 1 to 4, wherein the three-dimensional digital-double dataset (111) can be retrieved from a memory medium (115) and displayed statically or dynamically on a screen (171) as a virtual elevator installation, reproducing at least the height distances (h1, h2, h3) of the floors (21, 23, 25, 27) in the correct ratio to one another.

6. Method (151) according to any of claims 1 to 5, wherein further component model datasets (112) of components of an elevator installation (11) can be selected from a database (175) via a graphical user interface (173) and inserted into the three-dimensional digital-double dataset (111) via predefined interfaces (131, 135).

7. Method (151) according to claim 6, wherein at least counterweight (177), guide rail (179), shaft door (161), car door (163), drive component model data records (181) and suspension means component model data records (183) in different suspension means guiding variants can be selected as component model data records (112) of components.

8. Method (151) according to any of claims 1 to 7, wherein the characterizing properties (B, T, H) defined by measurement data (G1, G2, G3, G4, h1, h2, h3) are provided with a marker (*), so that they can be differentiated from characterizing properties (B, T, H) with default values (x, y, z).

9. Method (151) according to claim 8, wherein a component model dataset (112) of the digital-double dataset (111) can be replaced by a definitive component model dataset by the characterizing properties (B, T, H) thereof provided with a marker (*) being read out via an exchange routine, possible defined component model datasets of actually existing components of elevator installations (11) matching the characterizing properties (B, T, H) being determined from a database (175) on the basis of said marked characterizing properties (B, T, H), and the replacement component model dataset (112) being optionally additionally selected by manual inputs.

10. Elevator installation (11) comprising a system (1) for recording and processing elevator data of the elevator installation (11), the system (1) comprising:
at least one measuring apparatus (63, 73) by means of which, via at least one measuring run (65) using the elevator installation (11), at least those measurement data (G1, G2, G3, G4, h1, h2, h3) from which floor heights (h1, h2, h3) of the floors (21, 23, 25, 27) of the elevator installation (11) can be determined can be recorded;
a programmable device (101); and
a computer program product (109) with machine-readable program instructions (107);
**characterized in that**
during the measuring run (65) using the elevator installation (11), each floor (21, 23, 25, 27) of the elevator installation (11) is approached at least once, and by means of a measuring apparatus (63, 73) at least those measurement data (G1, G2, G3, G4, h1, h2, h3) which represent floor heights (h1, h2, h3) are recorded, and
**in that** by executing the computer program product (109) on the programmable device (101), taking into account the measurement data (G1, G2, G3, G4, h1, h2, h3) recorded during the measuring run (65) by the measuring apparatus (63, 73), a three-dimensional digital-double dataset (111) can be generated from component model datasets (112) and stored in a memory medium (115) of the programmable device (101), wherein the component model datasets (112) can have different configurations and are defined by characterizing properties (B, T, H) which are predefined with default values (x, y, z), wherein for each floor (21, 23, 25, 27) of the existing elevator installation (11) recorded by the measuring run (65), in the recorded sequence, in the three-dimensional digital-double dataset (111) created by the programmable device (101), each component model dataset (112) configurable as a floor portion component model dataset (121, 123, 125, 127) or as a shaft portion component model dataset (141, 143, 145, 147) is arranged one above the other in the vertical direction, and in each case the default value (x, y, z) of the characterizing property (B, **T,** H) thereof which defines the height distance (h1, h2, h3) to the next floor portion component model dataset (121, 123, 125, 127) or shaft portion component model dataset (141, 143, 145, 147) is replaced by the corresponding floor height (h1, h2, h3) determined from the measurement data (G1, G2, G3, G4, h1, h2, h3), and wherein the measuring apparatus (63, 73) is connected to the elevator control (41) of the existing elevator installation (11) and characterizing properties (T, B, H) can be extracted from control signals of the elevator control (41) and transmitted to the programmable device (101) by the measuring apparatus (63, 73).

## Revendications

1. Procédé (151) permettant la détection et le traitement de données d'ascenseur d'une installation d'ascenseur (11) existante, dans lequel, par au moins un trajet de mesure (65) comportant l'installation d'ascenseur (11) existante, chaque étage (21, 23, 25, 27) de l'installation d'ascenseur (11) existante est abordé au moins une fois et, à l'aide d'un dispositif de mesure (63, 73), au moins les données de mesure (G1, G2, G3, G4, h1, h2, h3) qui représentent des hauteurs d'étage (h1, h2, h3) sont détectées,
dans lequel
un jeu de données de double numérique (111) tridimensionnel est construit à partir de jeux de données de modèle de pièce (112) et est stocké dans un support de stockage (115), dans lequel les jeux de données de modèle de pièce (112) peuvent présenter différentes configurations et sont définis par des propriétés caractéristiques (T, B, H) qui sont prédéfinies avec des valeurs par défaut (x, y, z),
dans lequel des jeux de données de modèle de pièce (112) configurés comme jeu de données de modèle de pièce de section d'étage (121, 123, 125, 127) ou des jeux de données de modèle de pièce (112) configurés comme jeu de données de modèle de pièce de section de cage (141, 143, 145, 147) sont superposés dans le sens vertical pour chaque étage (21, 23, 25, 27) de l'installation d'ascenseur (11) détecté par le trajet de mesure (65) et la valeur par défaut (x, y, z) de la propriété caractéristique (T, B, H), qui définit la distance en hauteur (h1, h2, h3) par rapport au jeu de données de modèle de pièce de section d'étage (121, 123, 125, 127) ou au de données de modèle de pièce de section de cage (141, 143, 145, 147) suivant, est respectivement remplacée par la hauteur d'étage (h1, h2, h3) correspondante, déterminée à partir des données de mesure (G1, G2, G3, G4, h1, h2, h3).

2. Procédé (151) selon la revendication 1, dans lequel chaque jeu de données de modèle de pièce de section d'étage (121, 123, 125, 127) ou chaque jeu de données de modèle de pièce de section de cage (141, 143, 145, 147) présente des interfaces (131, 135) prédéfinies, par l'intermédiaire desquelles interfaces (131, 135) des jeux de données de modèle de pièce (112) peuvent être interconnectés et positionnés les uns par rapport aux autres, dans lequel des propriétés caractéristiques (T, B, H) correspondantes de chaque jeu de données de modèle de pièce à compléter sont automatiquement reproduites avec les propriétés caractéristiques (T, B, H) correspondantes du jeu de données de modèle de pièce (112) prévu pour la connexion par l'intermédiaire de l'interface (131, 135).

3. Procédé (151) selon la revendication 1 ou 2, dans lequel un jeu de données de modèle de pièce (112) configuré en tant que jeu de données de modèle de pièce de cabine d'ascenseur (153) est disposé dans la cage virtuelle construite par au moins un jeu de données de modèle de pièce de section de cage (141, 143, 145, 147) et des profils de déplacement (G1, G2, G3, G4) d'une cabine d'ascenseur (43) existante, enregistrés lors du trajet de mesure (65), sont associés au jeu de données de modèle de pièce de cabine d'ascenseur (153) dans l'ordre des étages (21, 23, 25, 27) en tant que propriétés caractéristiques (G1, G2, G3, G4).

4. Procédé (151) selon la revendication 3, dans lequel des dimensions spatiales de la cabine d'ascenseur (43) existante sont détectées en tant que valeurs de mesure (u, v, w) et les valeurs par défaut (q, r, s) des propriétés caractéristiques (N, O, P) associées du jeu de données du modèle de pièce de cabine d'ascenseur (153) sont remplacées par les dimensions spatiales mesurées, dans lequel les valeurs par défaut des propriétés caractéristiques (B, T) des jeux de données de modèle de pièce de section de cage (141, 143, 145, 147) sont contrôlées à l'aide d'une routine de contrôle de collision et, en cas de dimensions en collision, les propriétés caractéristiques (B, T) correspondantes sont adaptées aux dépassements conduisant aux collisions.

5. Procédé (151) selon l'une des revendications 1 à 4, dans lequel le jeu de données de double numérique (111) tridimensionnel est récupéré à partir d'un support de stockage (115) et peut être affiché sur un écran (171) statiquement et/ou dynamiquement en tant qu'installation d'ascenseur virtuelle de manière à reproduire au moins les distances en hauteur (h1, h2, h3) des étages (21, 23, 25, 27) dans une relation correcte les unes par rapport aux autres.

6. Procédé (151) selon l'une des revendications 1 à 5, dans lequel d'autres jeux de données de modèle de pièce (112) de composants d'une installation d'ascenseur (11) sont sélectionnés dans une base de données (175) par l'intermédiaire d'une interface utilisateur graphique (173) et peuvent être insérés dans le jeu de données de double numérique (111) tridimensionnel par l'intermédiaire d'interfaces (131, 135) prédéfinies.

7. Procédé (151) selon la revendication 6, dans lequel au moins des jeux de données de modèles de pièces de contrepoids (177), de rails de guidage (179), de portes de cage (161), de portes de cabine (163), d'entraînement (181) et des jeux de données de modèles de pièces de moyen de support (183) dans différentes variantes de guidage de moyen de support peuvent être sélectionnés en tant que jeu de données de modèle de pièce (112) de composants.

8. Procédé (151) selon l'une des revendications 1 à 7, dans lequel les propriétés caractéristiques (B, **T,** H) définies par des données de mesure (G1, G2, G3, G4, h1, h2, h3) sont pourvues d'un marquage (*) de sorte qu'elles peuvent être distinguées de propriétés caractéristiques (B, **T,** H) comportant des valeurs par défaut (x, y, z).

9. Procédé (151) selon la revendication 8, dans lequel un jeu de données de modèle de pièce (112) du jeu de données de double numérique (111) tridimensionnel peut être remplacé par un jeu de données de modèle de pièce définitif par le fait que ses propriétés caractéristiques (B, **T,** H) pourvues d'un marquage (*) sont lues par une routine d'échange, sur la base desdites propriétés caractéristiques (B, **T,** H) marquées, d'éventuels jeux de données de modèle de pièce de composants réels existants d'installations d'ascenseur (11), définis et adaptés aux propriétés caractéristiques (B, **T,** H), sont déterminés à partir d'une base de données (175), et le jeu de données de modèle de pièce (112) de remplacement est éventuellement sélectionné en complément par des entrées manuelles.

10. Installation d'ascenseur (11) comprenant un système (1) permettant la détection et le traitement de données d'ascenseur de l'installation d'ascenseur (11), dans lequel le système (1) présente :
au moins un dispositif de mesure (63, 73), à l'aide duquel au moins les données de mesure (G1, G2, G3, G4, h1, h2, h3), à partir desquelles des hauteurs d'étage (h1, h2, h3) des étages (21, 23, 25, 27) de l'installation d'ascenseur (11) peuvent être déterminées, peuvent être détectées par au moins un trajet de mesure (65) avec l'installation d'ascenseur (11) ;
un équipement programmable (101) ; et
un produit programme d'ordinateur (109) comportant des instructions de programme (107) lisibles par machine ;
**caractérisé en ce**
**que**, lors du trajet de mesure (65) avec l'installation d'ascenseur (11), chaque étage (21, 23, 25, 27) de l'installation d'ascenseur (11) est abordé au moins une fois et au moins les données de mesure (G1, G2, G3, G4, h1, h2, h3) qui représentent des hauteurs d'étage (h1, h2, h3) sont enregistrées à l'aide d'un dispositif de mesure (63, 73) ; et
**que**, par l'exécution du produit programme d'ordinateur (109) sur l'équipement programmable (101) en tenant compte des données de mesure (G1, G2, G3, G4, h1, h2, h3) détectées par le dispositif de mesure (63, 73) lors du trajet de mesure (65), un jeu de données de double numérique (111) tridimensionnel peut être construit à partir de jeux de données de modèle de pièce (112) et peut être mémorisé dans un support de stockage (115) de l'équipement programmable (101), dans lequel les jeux de données de modèle de pièce (112) peuvent présenter différentes configurations et sont définis par des propriétés caractéristiques (B, T, H) qui sont prédéfinies avec des valeurs par défaut (x, y, z), dans lequel, pour chaque étage (21, 23, 25, 27) détecté par le trajet de mesure (65) de l'installation d'ascenseur (11) existante, un jeu de données de modèle de pièce (112) pouvant être configuré comme un jeu de données de modèle de pièce de section d'étage (121, 123, 125, 127) ou un jeu de données de modèle de pièce de section de cage (141, 143, 145, 147) est respectivement superposé dans le sens vertical dans l'ordre détecté dans le jeu de données de double numérique (111) tridimensionnel généré par l'équipement programmable (101) et la valeur par défaut (x, y, z) de sa propriété caractéristique (B, T, H), qui détermine la distance en hauteur (h1, h2, h3) par rapport au jeu de données de modèle de pièce de section d'étage (121, 123, 125, 127) ou au jeu de données de modèle de pièce de section de cage (141, 143, 145, 147) suivant, est respectivement remplacée par la hauteur d'étage (h1, h2, h3) correspondante, déterminée à partir des données de mesure (G1, G2, G3, G4, h1, h2, h3), et dans lequel le dispositif de mesure (63, 73) est relié à la commande d'ascenseur (41) de l'installation d'ascenseur (11) existante et des propriétés caractéristiques (T, B, H) peuvent être extraites de signaux de commande de la commande d'ascenseur (41) par le dispositif de mesure (63, 73) et peuvent être transmises à l'équipement programmable (101).
